# DEMANDE DE BREVET EUROPEEN

(11) **EP 3 173 900 A1**
(43) Date de publication de la demande: **31.05.2017**
(21) Numéro de dépôt: 16201268.6
(22) Date de dépôt: 29.11.2016
(51) Int. Cl.: G06F 1/26, G06F 1/30, G06F 1/16

(54) **BORNE D'INFORMATION MULTIMEDIA AUTONOME ET PROCEDE DE MISE EN OEUVRE D'UNE TELLE BORNE**

(30) Priorité: 30.11.2015 FR 1561597
(71) Demandeur: Paya, Denis, 42380 Luriecq (FR); Delobel, Jean-Charles, 42140 Chevrières (FR)
(72) Inventeur: Paya, Denis, 42380 Luriecq (FR); Delobel, Jean-Charles, 42140 Chevrières (FR)
(74) Mandataire: Cabinet Laurent & Charras

(57) **Abrégé**

La présente invention concerne une borne (1) d'information multimédia autonome, comprenant : un carter étanche (10) ; un système d'alimentation (20) en énergie électrique, incluant une source d'énergie autonome (21) et un dispositif de stockage (22) ; et une unité centrale (30) qui est disposée dans le carter étanche (10), qui est alimentée en énergie électrique automatiquement et sélectivement par la source d'énergie autonome (21) et le dispositif de stockage (22), et qui inclut un support d'informations autonome (50) comprenant des fichiers informatiques (51-54) et un dispositif de communication sans fil (60) apte à créer un réseau local sans fil (6) ; le support d'informations autonome (50) étant consultable par un utilisateur muni d'un terminal personnel (2) par connexion locale via le dispositif de communication sans fil (60), lorsque l'unité centrale (30) est alimentée en énergie électrique par le système d'alimentation (20). L'invention concerne également un procédé de mise en oeuvre d'une telle borne (1).

## Description

La présente invention concerne une borne d'information multimédia autonome, permettant d'avoir accès à des informations numériques dans des lieux non couverts par les réseaux de communication classique (3G, 4G, Edge, GPRS). L'invention concerne également un procédé de mise en oeuvre d'une telle borne.

De nos jours, il est aisé de trouver des informations sur un lieu remarquable, tel qu'un site touristique, un monument, un sentier thématique, un quartier particulier d'une ville, etc. Par exemple, une personne visitant ce lieu peut disposer d'une brochure ou d'un guide touristique, incluant des informations telles qu'un plan, des photographies et des explications pertinentes. En alternative ou en complément, il est possible d'utiliser un terminal personnel tel qu'un téléphone, une tablette, un ordinateur portable, pour chercher ces informations sur internet.

Cependant, les personnes ne possédant pas de forfait de données (« data » en anglais), permettant d'accéder en tous lieux au réseau internet, ne peuvent pas accéder aux informations disponibles en ligne depuis de tels lieux remarquables.

En outre, il existe des lieux remarquables qui ne sont pas couverts par les réseaux de communication classique, ce qui empêche la recherche d'informations sur internet. Généralement, ces lieux ne sont pas non plus alimentés en énergie électrique.

Il est possible de placer des panneaux d'information ou des tables d'orientation dans de tels lieux. Toutefois, de tels supports d'information sont sensibles à l'usure dans le temps. En outre, leurs informations sont limitées, peu interactives et difficilement actualisables.

US2012/324245A1 décrit une structure informatique en nuage, comprenant différentes bornes autonomes interconnectées. Ces bornes sont destinées à être connectées entre elles et à internet, afin de fournir un accès réseau dans les zones rurales des pays en développement. Cependant, ces bornes ne visent pas à assurer une fonction d'information multimédia autonome, en proposant de l'information multimédia stockée de manière non transitoire et non volatile, sans nécessité d'être connectées à internet ou à une autre borne.

Le but de la présente invention est de remédier aux inconvénients ci-dessus.

A cet effet, l'invention a pour objet une borne d'information multimédia autonome, comprenant : un carter étanche ; un système d'alimentation en énergie électrique, incluant une source d'énergie autonome et un dispositif de stockage ; et une unité centrale qui est disposée dans le carter étanche, qui est alimentée en énergie électrique automatiquement et sélectivement par la source d'énergie autonome et le dispositif de stockage, et qui inclut un support d'informations autonome comprenant des fichiers informatiques et un dispositif de communication sans fil apte à créer un réseau local sans fil ; le support d'informations autonome étant consultable par un utilisateur muni d'un terminal personnel par connexion locale via le dispositif de communication sans fil, lorsque l'unité centrale est alimentée en énergie électrique par le système d'alimentation.

Ainsi, l'invention permet aux utilisateurs proches de la borne de disposer d'une source d'informations vastes et interactives, en utilisant des moyens de communication modernes et familiers. La borne peut constituer un point de partage, et permettre le téléchargement de documents, sans avoir besoin d'un forfait de données.

La borne est autonome et indépendante, à la fois tant que source d'alimentation en énergie et source d'informations. La borne n'a pas besoin de se connecter à internet ou à une autre borne pour assurer sa fonction d'information multimédia. Le support d'information est stocké dans sa mémoire propre.

Pour les exploitants, la borne permet de proposer un moyen de communication innovant, et ceci en tous lieux ; de cibler la communication en fonction de l'endroit où la borne est implantée ; de disposer d'un support de communication résistant et actualisable à moindres frais ; et d'exploiter des données telles que les statistiques de connexions, les adresses mails et formulaires renseignés par les utilisateurs, etc.

Selon d'autres caractéristiques avantageuses de l'invention, prises isolément ou en combinaison :
- L'unité centrale est alimentée sélectivement en fonction, d'une part, de l'énergie électrique produite par la source d'énergie autonome et, d'autre part, de l'énergie électrique stockée par le dispositif de stockage.
- Le système d'alimentation est configuré pour stopper l'alimentation de l'unité centrale lorsque la source d'énergie autonome génère une tension d'alimentation inférieure à une tension seuil d'alimentation ou que le dispositif de stockage présente une tension de charge inférieure à une tension seuil minimale.
- Le système d'alimentation comprend une carte de régulation des flux d'énergie électrique, disposée entre la source d'énergie autonome, le dispositif de stockage et l'unité centrale.
- L'unité centrale inclut une carte serveur équipée d'un microprocesseur.
- Les fichiers informatiques du support d'informations autonome comprennent des pages web formant un site internet, des images, des vidéos, des fichiers son, des fichiers texte et/ou un formulaire.
- La borne comprend une horloge temps réel et un moyen d'alimentation propre à l'horloge, conservant un décompte du temps même lorsque l'unité centrale n'est pas alimentée par le système d'alimentation.
- La borne comprend au moins un capteur relié à l'unité centrale.

L'invention a également pour objet un procédé de mise en oeuvre d'une borne telle que mentionnée ci-dessus.

Selon un premier aspect, le procédé est caractérisé en ce que l'unité centrale a un cycle de fonctionnement comprenant les étapes suivantes :
- une étape de mise sous tension de l'unité centrale lorsque la source d'énergie autonome génère une tension d'alimentation montant au-dessus d'une tension seuil d'alimentation ;
- une étape de démarrage automatique du programme ou d'au moins certains programmes installés sur l'unité centrale ;
- une étape de génération du réseau local sans fil ;
- une étape de service, dans laquelle le support d'informations autonome est consultable par un utilisateur muni d'un terminal personnel par connexion locale via le réseau local sans fil ;
- une étape de transmission d'une consigne d'arrêt à l'unité centrale lorsque la tension d'alimentation générée par la source d'énergie autonome descend au-dessous de la tension seuil d'alimentation ou que le dispositif de stockage présente une tension de charge inférieure à une tension seuil minimale ;
- une étape d'arrêt du ou des programmes exécutés par l'unité centrale ; et
- une étape de mise hors tension de l'unité centrale.

Selon un deuxième aspect, le procédé est caractérisé en ce que le système d'alimentation a un cycle de fonctionnement présentant les conditions suivantes :
- lorsque le dispositif de stockage a une tension de charge inférieure à une tension nécessitant une recharge, et que la tension d'alimentation générée par la source d'énergie autonome est supérieure ou égale à une tension seuil d'alimentation, alors la source autonome charge le dispositif de stockage ;
- lorsque la tension de charge du dispositif de stockage est supérieure à une tension seuil maximale, alors la source d'énergie autonome ne charge pas le dispositif de stockage ;
- lorsque l'unité centrale est sous tension, et que la source d'énergie autonome génère une tension d'alimentation inférieure à la tension seuil d'alimentation ou que la tension de charge du dispositif de stockage est inférieure à une tension seuil minimale, alors le système d'alimentation transmet une consigne d'arrêt à l'unité centrale, puis l'unité centrale est mise hors tension ;
- lorsque l'unité centrale est sous tension, que la tension d'alimentation générée par la source d'énergie autonome est supérieure ou égale à la tension seuil d'alimentation, et que la tension de charge du dispositif de stockage est supérieure à la tension seuil minimale et inférieure à la tension nécessitant une recharge, alors la source d'énergie autonome alimente seule l'unité centrale ;
- lorsque l'unité centrale est sous tension, que la tension d'alimentation générée par la source d'énergie autonome est supérieure ou égale à la tension seuil d'alimentation, et que la tension de charge du dispositif de stockage est supérieure ou égale à une tension seuil minimale, alors la source d'énergie autonome et le dispositif de stockage alimentent ensemble l'unité centrale ; et
- lorsque l'unité centrale est hors tension, que la tension d'alimentation générée par la source d'énergie autonome est supérieure ou égale à la tension seuil d'alimentation, et que la tension de charge du dispositif de stockage est supérieure ou égale à la tension seuil minimale, alors le système d'alimentation met sous tension l'unité centrale.

L'invention sera mieux comprise à la lecture de la description qui va suivre, donnée uniquement à titre d'exemple non limitatif et faite en référence aux dessins annexés sur lesquels :
- la figure 1 est une vue de côté d'une borne conforme à l'invention ;
- la figure 2 est une vue de face de la borne ;
- la figure 3 est une vue en perspective de la borne, générant un réseau local sans fil ;
- la figure 4 est une représentation schématique des éléments constitutifs de la borne ;
- la figure 5 est un diagramme illustrant le fonctionnement de l'unité centrale équipant la borne ; et
- la figure 6 est un diagramme illustrant le fonctionnement du système d'alimentation en énergie électrique équipant la borne.

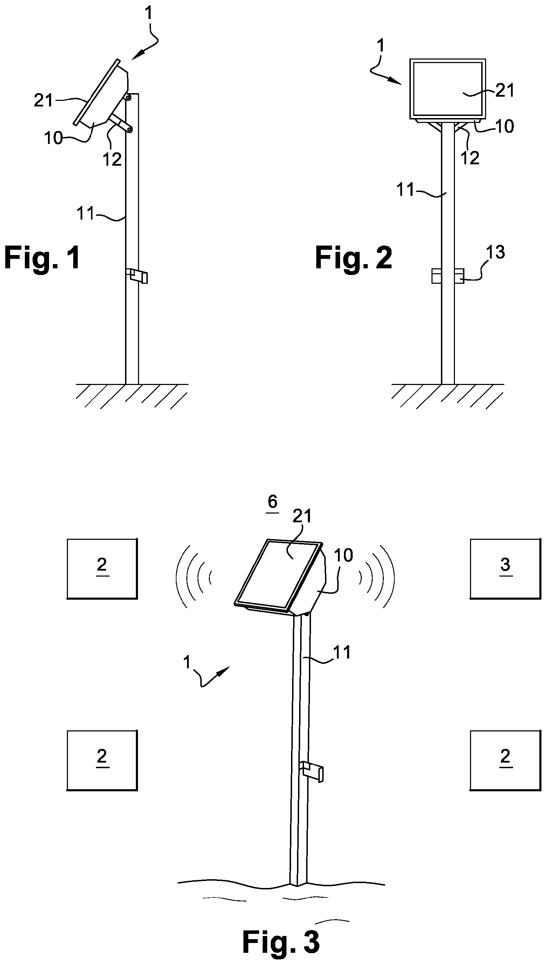

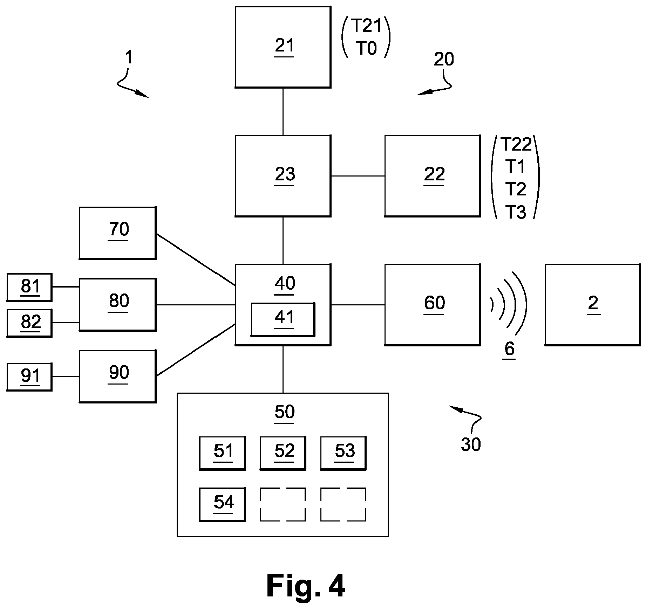

Sur les figures 1 à 4 est représentée une borne 1 d'information multimédia autonome conforme à l'invention.

La borne 1 est prévue pour mettre des informations multimédia à disposition d'utilisateurs munis d'un terminal personnel 2, tel qu'un téléphone, une tablette ou un ordinateur portable. Les informations peuvent être chargées sur la borne 1 par tout moyen adapté, notamment depuis un terminal administrateur 3.

La borne 1 est configurée pour créer un réseau local sans fil 6 sur une zone donnée ayant la borne 1 comme épicentre. Le réseau 6 permet aux terminaux 2 et 3 situés à proximité de la borne 1, dans cette zone, de se connecter directement à la borne 1 et d'accéder aux informations qui y sont stockées.

La borne 1 comprend un carter 10, un système d'alimentation 20 et une unité centrale 30. L'unité centrale 30 comprend une carte serveur 40, un support d'informations autonome 50, un dispositif de communication sans fil 60 et une horloge temps réel 70. Optionnellement, l'unité centrale 30 peut être reliée à des connecteurs 80 et 90 s'étendant à l'extérieur du carter 10.

Le carter 10 est conçu pour un usage en milieu extérieur. En particulier, le carter 10 est étanche pour protéger les éléments de la borne 1 qui y sont logés. Sur l'exemple des figures, le carter 10 est monté sur un poteau 11 vertical via des organes de fixation 12. Le poteau 11 repose au sol dans le lieu choisi pour recevoir la borne 1. Le poteau 11 peut comporter un panneau explicatif 13 précisant la démarche à suivre pour se connecter à la borne 1. Le carter 10 peut présenter toute forme adaptée à l'application visée.

Le système d'alimentation 20 est prévu pour alimenter la borne 1 en énergie électrique. Le système 20 inclut une source autonome 21 de production d'énergie électrique, un dispositif de stockage 22 de l'énergie électrique, et une carte de régulation 23 des flux d'énergie électrique.

La source 21 est de préférence un panneau solaire, disposé sur une face externe du carter 10, avec un positionnement optimisé pour capter l'énergie solaire et la transformer en énergie électrique. En alternative, la source 21 peut être de tout type adapté à l'application visée, par exemple une éolienne ou un hydrolienne. Le dispositif de stockage 22 est de préférence une batterie électrique disposée dans le carter 10, ou un ensemble de batteries électriques. Lorsque la borne 1 est en service, la source 21 génère une tension d'alimentation T21 et le dispositif de stockage 22 présente une tension de charge T22.

La carte de régulation 23 est disposée dans le carter 10, à proximité de la carte serveur 40 de l'unité centrale 30. La carte 23 est connectée électriquement directement à la source 21, au dispositif de stockage 22 et à l'unité centrale 30. Egalement, la carte 23 est connectée informatiquement directement à la carte serveur 40. La carte 23 permet d'assurer plusieurs fonctions : gestion de la charge et de l'utilisation du dispositif de stockage 22, activation et alimentation électrique de la carte serveur 40, désactivation et mise hors tension de la carte serveur 40.

L'unité centrale 30 est disposée dans le carter étanche 10. Les éléments 50, 60, 70, 80 et 90 sont connectés à la carte serveur 40.

La carte serveur 40 est équipée d'un microprocesseur 41 pour le traitement des données, de manière à assurer le fonctionnement de la borne 1. La carte 40 est une carte informatique qui s'apparente à un serveur de données et permet le stockage et la diffusion de données numériques. La carte 40 répond à des requêtes émis par des "clients" selon le principe client-serveur. Le format des requêtes suit les normes habituelles, tout comme les protocoles réseaux, afin de rester dans les standards de la communication informatique en réseau. Le microprocesseur 41 exécute un système d'exploitation permettant la mise en oeuvre de différents programmes ou services.

Le support d'informations autonome 50 est matérialisé par un dispositif de stockage de données numériques, avantageusement intégré à la carte 40. A la différence d'une borne wifi, les données sont stockées sur la borne 1 de manière non transitoire et non volatile. Le support 50 comporte les données du système d'exploitation, ainsi que différents fichiers informatiques 51, 52, 53, 54, etc. A titre d'exemples non limitatifs, ces fichiers peuvent inclure des pages web formant un site internet, des images, des vidéos, des fichiers son et/ou des fichiers texte. Selon un exemple particulier, les fichiers peuvent inclure un formulaire permettant de recueillir les coordonnées et/ou les commentaires des utilisateurs de la borne 1, ou proposant un quizz en lien avec le lieu dans quel la borne 1 est installée.

En pratique, les fichiers hébergés par le support 50 sont consultables par des utilisateurs munis de terminaux 2, par connexion locale via le réseau 6 et le dispositif 60. Cette consultation peut être effectuée simplement et gratuitement lorsque la borne 1 est en service, c'est-à-dire lorsque l'unité centrale 30 est alimentée en énergie par le système 20.

Le dispositif de communication sans fil 60 est configuré pour créer le réseau local sans fil 6 autour de la borne 1, et ainsi permettre l'accès au support 50. Le dispositif 60 est de préférence un module wifi, générant un signal radio dans les environs de la borne 1. Avantageusement, ce module wifi n'a pas besoin d'être configuré pour établir une connexion au réseau internet. En effet, la borne 1 est susceptible d'être installée dans des lieux dépourvus d'accès au réseau internet, et dispose de son support d'informations autonome 50. L'unité centrale 30 peut être équipée de différents logiciels permettant l'échange de données via le dispositif 60. A titre d'exemple non limitatifs, ces logiciels peuvent être des serveurs DHCP, HTTP ou FTP.

L'horloge temps réel 70 est équipée d'un moyen d'alimentation en énergie qui lui est propre, distinct du système 20, par exemple une pile électrique. Ainsi, l'horloge 70 est adaptée pour conserver un décompte du temps, notamment la date et l'heure, même lorsque l'unité centrale 30 n'est pas alimentée par le système 20.

Le connecteur 80 est prévu pour le branchement de capteurs, tels qu'un capteur de température 81 et un capteur de pression 82. Le connecteur 80 est par exemple un périphérique I²C. Les capteurs 81 et 82 sont reliés à l'unité centrale 30, plus précisément à la carte serveur 40, pour le traitement et/ou l'enregistrement des données mesurées.

Le connecteur 90 est prévu pour recevoir un dispositif auxiliaire de stockage de données informatiques, par exemple une carte mémoire ou une clé USB. Par exemple, ce dispositif auxiliaire permet de mettre à jour les fichiers 51-54 présents sur le support 50, ou récupérer les mesurées effectuées par les capteurs 81 et 82.

L'unité centrale 30 est alimentée en énergie électrique par le système 20. Plus précisément, l'unité centrale 30 est alimentée automatiquement et sélectivement par la source 21 et le dispositif de stockage 22. En particulier, la carte serveur 40 est alimentée sélectivement en fonction, d'une part, de l'énergie électrique produite par la source 21 et, d'autre part, de l'énergie électrique stockée par le dispositif de stockage 22.

La borne 1 cesse d'être alimentée par le système 20 lorsque la tension d'alimentation T21 de la source 21 descend au-dessous d'une tension seuil d'alimentation T0 prédéterminée ou que la tension de charge T22 du dispositif de stockage 60 est inférieure à une tension seuil minimale T1 prédéterminée. Cet arrêt de l'alimentation se produit notamment à la tombée de la nuit.

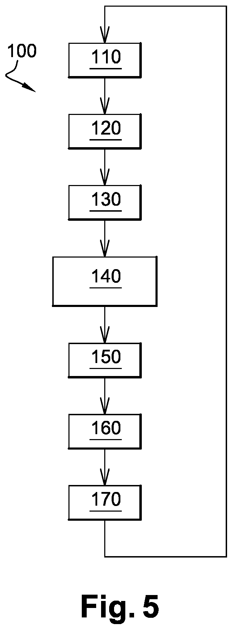

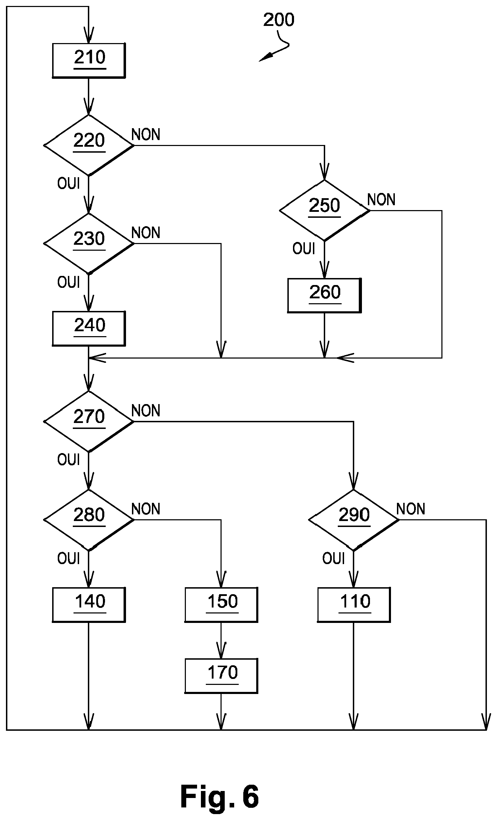

Le procédé de mise en oeuvre de la borne 1 est détaillé ci-après en référence aux figures 5 et 6.

Comme montré à la figure 5, l'unité centrale 30 a un cycle de fonctionnement 100 comprenant des étapes successives 110, 120, 130, 140, 150, 160 et 170. Plus précisément, le cycle 100 correspond au fonctionnement de la carte serveur 40.

L'étape 110 concerne la mise sous tension de l'unité centrale 30, lorsque la source 21 génère une tension d'alimentation T21 montant au-dessus de la tension seuil d'alimentation T0. Cette mise sous tension se produit typiquement en début de journée, lorsque le soleil se lève et illumine la borne 1.

L'étape 120 concerne le démarrage automatique du programme, des programmes, ou d'au moins certains programmes, installés sur l'unité centrale 30. Le ou les programmes utilisés au démarrage correspondent à ceux vraiment utiles au fonctionnement de la borne 1. D'autres programmes peuvent être lancés ultérieurement en cas de besoin, au cours du fonctionnement de la borne 1.

L'étape 130 concerne la génération du réseau local sans fil 6 par le dispositif 60, piloté par l'unité centrale 30.

L'étape 140 concerne la période de la journée durant laquelle la borne 1 est en service actif, de sorte que le support d'informations autonome 50 est consultable par un utilisateur muni d'un terminal personnel 2 par connexion locale via le réseau local sans fil 6.

L'étape 150 concerne la transmission d'une consigne d'arrêt à l'unité centrale 30, depuis la carte de régulation 23, lorsque la tension d'alimentation T21 générée par la source d'énergie autonome 21 descend au-dessous de la tension seuil d'alimentation T0 ou que le dispositif de stockage 22 présente une tension de charge T22 inférieure à la tension seuil minimale T1. Cette consigne d'arrêt est typiquement transmise à l'unité centrale 30 en fin de journée, lorsque la source d'énergie autonome 21 n'est plus éclairée par le soleil ou que le dispositif de stockage 22 est déchargé.

L'étape 160 concerne l'arrêt du ou des programmes exécutés par l'unité centrale 30, précédant sa mise hors tension.

L'étape 170 concerne la mise hors tension 170 de l'unité centrale 30.

Les étapes 110, 120, 130 et 140 se succèdent automatiquement. De même, les étapes 150, 160 et 170 se succèdent automatiquement. Les étapes 110 et 150 sont déclenchées par des conditions particulières, détaillées ci-dessus.

Comme montré à la figure 6, caractérisé en ce que le système d'alimentation 20 a un cycle de fonctionnement 200 comportant des étapes 210, 240 et 260 particulières, ainsi que des conditions 220, 230, 240, 270, 280, 290 spécifiques. Plus précisément, le cycle 200 correspond au fonctionnement de la carte de régulation 23. A cet effet, la carte 23 comporte un microprocesseur contenant et exécutant son algorithme de fonctionnement selon le cycle 200. Le cycle 100 de fonctionnement de l'unité centrale 30 est intimement lié au cycle 200 de fonctionnement de la carte de régulation 23, d'où la présence des étapes 110, 140, 150 et 170 sur la figure 6.

L'étape 210 concerne la mesure par la carte de régulation 23 de la tension d'alimentation T21 générée par la source 21 et de la tension de charge T22 du dispositif de stockage 22. L'étape 210 est répétée en permanence par la carte 23, avec une périodicité préétablie, même lorsque la carte serveur 40 est hors tension et que la borne 1 n'est pas en service actif.

Suite à l'étape 210, dans un premier temps, la carte 23 vérifie la condition 220 relative à l'état de charge du dispositif 22 par la source 21.

Si le dispositif 22 est en charge et donc que la condition 220 est remplie, la carte 23 vérifie la condition 230 relative au niveau de charge du dispositif 22, plus précisément vérifie si sa tension de charge T22 est supérieure à une tension seuil maximale T2. Dans l'affirmative, correspondant à l'étape 240, la carte 23 coupe la charge du dispositif 22 par la source 21, c'est-à-dire que la carte 23 coupe le flux électrique provenant de la source 21 et dirigé vers le dispositif 22. Dans la négative, la charge du dispositif 22 par la source 21 se poursuit, c'est-à-dire que la carte 23 autorise le passage du flux électrique provenant de la source 21 et dirigé vers le dispositif 22.

Si le dispositif 22 n'est pas en charge et donc que la condition 220 n'est pas remplie, la carte 23 vérifie la condition 250 relative au niveau de charge du dispositif 22, plus précisément vérifie si sa tension de charge T22 est inférieure à une tension nécessitant sa recharge T3. Dans l'affirmative, correspondant à l'étape 260, la carte 23 commande la charge du dispositif 22 par la source 21, c'est-à-dire que la carte 23 autorise le passage du flux électrique provenant de la source 21 et dirigé vers le dispositif 22. Dans la négative, le fonctionnement du système 20 se poursuit sans charge du dispositif 22 par la source 21, c'est-à-dire sans que la carte 23 n'autorise le passage du flux électrique provenant de la source 21 et dirigé vers le dispositif 22.

Ainsi, la carte de régulation 23 permet de préserver la durée de vie du dispositif de stockage 22 en contrôlant sa charge et son utilisation. Les étapes et conditions ci-dessus correspondent aux actions classiques d'un régulateur de charge.

Egalement, la carte 23 comporte un convertisseur de tension permettant d'adapter et de stabiliser chacune des tensions T21 et T22, provenant des sources d'alimentation et de stockage 21 et 22, à destination de la carte serveur 40. Si l'apport électrique de la source 21 n'est pas suffisant pour faire fonctionner la carte 40, c'est le dispositif 22 qui assure le complément. La carte 23 vise également à optimiser la consommation électrique de la carte 40, en stoppant son fonctionnement en période nocturne et en autorisant son fonctionnement en période diurne.

A cet effet, la carte 23 vérifie la condition 270 relative à l'alimentation de la carte serveur 40.

Si la carte 40 est alimentée et donc que la condition 270 est remplie, la carte 23 vérifie la double condition 280 relative au niveau de production de la source d'énergie autonome 21 et au niveau de charge du dispositif 22. Plus précisément, la carte 23 vérifie si la tension d'alimentation T21 générée est supérieure ou égale à la tension seuil d'alimentation T0 et si la tension de charge T22 est supérieure à la tension seuil minimale T2. Si cette double condition 280 est remplie, le fonctionnement de la borne 1 se poursuit, dans l'étape 140. Si l'une des deux composantes de la double condition 280 n'est pas remplie, la carte serveur 23 transmet la consigne d'arrêt à la carte serveur 40 selon l'étape 150, en vue d'obtenir sa mise hors tension dans l'étape 170.

Si la carte 40 n'est pas alimentée et donc que la condition 270 n'est pas remplie, la carte 23 vérifie la double condition 290 relative au niveau de production de la source d'énergie autonome 21 et au niveau de charge du dispositif 22. Plus précisément, la carte 23 vérifie si la tension d'alimentation T21 générée est supérieure ou égale à la tension seuil d'alimentation T0 et si la tension de charge T22 est supérieure à la tension seuil minimale T2. Si les deux composantes de cette double condition 290 sont remplies, la carte serveur 23 commande la mise sous tension de la carte 40 dans l'étape 110. Si l'une des composantes de la double condition 290 n'est pas remplie, la carte 40 n'est pas mise sous tension.

La variation de luminosité entre le jour et la nuit entraine une diminution de tension d'alimentation T21 générée par la source 21. La carte 23 interprète cette diminution comme une entrée en période nocturne et commande dans ce cas l'arrêt de la carte 40. A l'inverse, le passage de la nuit au jour entraine une augmentation de la tension d'alimentation T21 générée par la source 21, ce qui conduit la carte 23 à redémarrer la carte 40. De plus, entre les cartes 23 et 40 est établie une liaison de communication informatique bidirectionnelle, ce qui permet d'informer en temps réel la carte serveur 40 du niveau d'alimentation électrique en provenance de la source 21 et du dispositif 22.

Avantageusement, la carte de régulation 23 peut comporter un indicateur visuel de l'état et du niveau de charge du dispositif 22. Egalement, la carte 23 peut comporter un commutateur à trois positions permettant de :
- forcer l'activation de la carte 40 ;
- basculer en mode automatique, de sorte que la carte 40 est activée ou désactivée en fonction des périodes de jour et de nuit, comme décrit ci-dessus ; ou
- forcer la désactivation de la carte 40.

Les éléments constitutifs de la borne 1, en particulier les cartes 23 et 40, sont de préférence spécifiquement conçus pour permettre son fonctionnement en environnement difficile. Les cartes 23 et 40 peuvent être conçues pour résister à des températures extrêmes, par exemple comprises entre -40 et +85 °C. Egalement, la borne 1 en fonctionnement présente une consommation électrique très faible, par exemple inférieure à 50 Watt-heure sur une journée.

Par ailleurs, la borne 1 peut être conformée différemment des figures 1 à 4, tandis que le procédé peut comporter des étapes et conditions différentes des figures 5 et 6, sans sortir du cadre de l'invention.

En outre, les caractéristiques techniques des différents modes de réalisation et variantes mentionnés ci-dessus peuvent être, en totalité ou pour certaines d'entre elles, combinées entre elles. Ainsi, la borne 1 peut être adaptée en termes de coût, d'ergonomie, de fonctionnalités et de performance.

## Revendications

1. Borne (1) d'information multimédia autonome, comprenant :
- un carter étanche (10) ;
- un système d'alimentation (20) en énergie électrique, incluant une source d'énergie autonome (21) et un dispositif de stockage (22) ; et
- une unité centrale (30) qui est disposée dans le carter étanche (10), qui est alimentée en énergie électrique automatiquement et sélectivement par la source d'énergie autonome (21) et le dispositif de stockage (22), et qui inclut :
- un support d'informations autonome (50) comprenant des fichiers informatiques (51-54) et
- un dispositif de communication sans fil (60) apte à créer un réseau local sans fil (6) ;
le support d'informations autonome (50) étant consultable par un utilisateur muni d'un terminal personnel (2) par connexion locale via le dispositif de communication sans fil (60), lorsque l'unité centrale (30) est alimentée en énergie électrique par le système d'alimentation (20).

2. Borne (1) selon la revendication précédente, **caractérisée en ce que** l'unité centrale (30) est alimentée sélectivement en fonction, d'une part, de l'énergie électrique produite par la source d'énergie autonome (21) et, d'autre part, de l'énergie électrique stockée par le dispositif de stockage (22).

3. Borne (1) selon l'une des revendications précédentes, **caractérisée en ce que** le système d'alimentation (20) est configuré pour stopper l'alimentation de l'unité centrale (30) lorsque la source d'énergie autonome (21) génère une tension d'alimentation (T21) inférieure à une tension seuil d'alimentation (T0) ou que le dispositif de stockage (22) présente une tension de charge (T22) inférieure à une tension seuil minimale (T1).

4. Borne (1) selon l'une des revendications précédentes, **caractérisée en ce que** le système d'alimentation (20) comprend une carte de régulation (23) des flux d'énergie électrique, disposée entre la source d'énergie autonome (21), le dispositif de stockage (22) et l'unité centrale (30).

5. Borne (1) selon l'une des revendications précédentes, **caractérisée en ce que** l'unité centrale (30) inclut une carte serveur (40) équipée d'un microprocesseur (41).

6. Borne (1) selon l'une des revendications précédentes, **caractérisée en ce que** les fichiers informatiques (51-54) du support d'informations autonome (50) comprennent des pages web formant un site internet, des images, des vidéos, des fichiers son, des fichiers texte et/ou un formulaire.

7. Borne (1) selon l'une des revendications précédentes, **caractérisée en ce qu'**elle comprend une horloge (70) temps réel et un moyen d'alimentation propre à l'horloge (70), conservant un décompte du temps même lorsque l'unité centrale (30) n'est pas alimentée par le système d'alimentation (20).

8. Borne (1) selon l'une des revendications précédentes, **caractérisée en ce qu'**elle comprend au moins un capteur (81 ; 82) relié à l'unité centrale (30).

9. Procédé de mise en oeuvre d'une borne (1) selon l'une des revendications 1 à 8, **caractérisé en ce que** l'unité centrale (30) a un cycle de fonctionnement (100) comprenant les étapes suivantes :
- une étape de mise sous tension (110) de l'unité centrale (30) lorsque la source d'énergie autonome (21) génère une tension d'alimentation (T21) montant au-dessus d'une tension seuil d'alimentation (T0) ;
- une étape de démarrage (120) automatique du programme ou d'au moins certains programmes installés sur l'unité centrale (30) ;
- une étape de génération (130) du réseau local sans fil (6) ;
- une étape de service (140), dans laquelle le support d'informations autonome (50) est consultable par un utilisateur muni d'un terminal personnel (2) par connexion locale via le réseau local sans fil (6) ;
- une étape de transmission d'une consigne d'arrêt (150) à l'unité centrale (30) lorsque la tension d'alimentation (T21) générée par la source d'énergie autonome (21) descend au-dessous de la tension seuil d'alimentation (T0) ou que le dispositif de stockage (22) présente une tension de charge (T22) inférieure à une tension seuil minimale (T1) ;
- une étape d'arrêt (160) du ou des programmes exécutés par l'unité centrale (30) ; et
- une étape de mise hors tension (170) de l'unité centrale (30).

10. Procédé de mise en oeuvre d'une borne (1) selon l'une des revendications 1 à 8, **caractérisé en ce que** le système d'alimentation (20) a un cycle de fonctionnement (200) présentant les conditions suivantes :
- lorsque le dispositif de stockage (22) a une tension de charge (T22) inférieure à une tension nécessitant une recharge (T3), et que la tension d'alimentation (T21) générée par la source d'énergie autonome (21) est supérieure ou égale à une tension seuil d'alimentation (T0), alors la source d'énergie autonome (21) charge le dispositif de stockage (22) ;
- lorsque la tension de charge (T22) du dispositif de stockage (22) est supérieure à une tension seuil maximale (T2), alors la source d'énergie autonome (21) ne charge pas le dispositif de stockage (22) ;
- lorsque l'unité centrale (30) est sous tension, et que la source d'énergie autonome (21) génère une tension d'alimentation (T21) inférieure à la tension seuil d'alimentation (T0) ou que la tension de charge (T22) du dispositif de stockage (22) est inférieure à une tension seuil minimale (T1), alors le système d'alimentation (20) transmet une consigne d'arrêt à l'unité centrale (30), puis l'unité centrale (30) est mise hors tension ;
- lorsque l'unité centrale (30) est sous tension, que la tension d'alimentation (T21) générée par la source d'énergie autonome (21) est supérieure ou égale à la tension seuil d'alimentation (T0), et que la tension de charge (T22) du dispositif de stockage (22) est supérieure à la tension seuil minimale (T1) et inférieure à la tension nécessitant une recharge (T3), alors la source d'énergie autonome (21) alimente seule l'unité centrale (30) ;
- lorsque l'unité centrale (30) est sous tension, que la tension d'alimentation (T21) générée par la source d'énergie autonome (21) est supérieure ou égale à la tension seuil d'alimentation (T0), et que la tension de charge (T22) du dispositif de stockage (22) est supérieure ou égale à la tension seuil minimale (T1), alors la source d'énergie autonome (21) et le dispositif de stockage (22) alimentent ensemble l'unité centrale (30) ; et
- lorsque l'unité centrale (30) est hors tension, que la tension d'alimentation (T21) générée par la source d'énergie autonome (21) est supérieure ou égale à la tension seuil d'alimentation (T0), et que la tension de charge (T22) du dispositif de stockage (22) est supérieure ou égale à la tension seuil minimale (T1), alors le système d'alimentation (20) met sous tension l'unité centrale (30).
